# EUROPEAN PATENT SPECIFICATION

(11) **EP 4 417 457 B1**
(45) Date of publication and mention of the grant of the patent: **03.12.2025**
(21) Application number: 23205152.4
(22) Date of filing: 23.10.2023
(51) Int. Cl.: B60L 50/20, B60L 58/13, B60L 58/14, B60L 58/16, B60L 58/21, B62M 6/90

(54) **APPARATUS AND METHOD FOR CHARGING CONTROL OF ELECTRIC BICYCLE**
VORRICHTUNG UND VERFAHREN ZUR LADESTEUERUNG EINES ELEKTRISCHEN FAHRRADS
APPAREIL ET PROCÉDÉ DE COMMANDE DE CHARGE DE BICYCLETTE ÉLECTRIQUE

(30) Priority: 20.02.2023 KR 20230022022
(43) Date of publication of application: 21.08.2024
(73) Proprietor: HL Mando Corporation, Pyeongtaek-si, Gyeonggi-do 17962 (KR)
(72) Inventor: Min, Kyung Hyun, 06626 Seoul (KR)
(74) Representative: Gulde & Partner

(56) References cited:
- WO-A1-2012/153877
- CN-A- 106 183 857
- US-A1- 2012 202 649

## Description

### BACKGROUND

### 1. Field of the Invention

The present disclosure relates to an apparatus and method for controlling the charging of an electric bicycle, and more specifically to an apparatus and method for controlling the charging of an electric bicycle which are capable of efficiently charging a plurality of batteries and thereby increasing the driving distance of an electric bicycle.

### 2. Discussion of Related Art

A bicycle is a means of transportation that is driven mainly by the rider's leg power. Recently, electric bicycles which are equipped with a battery and add a driving force for movement by adding a motor driven by the battery have been widely used, as shown in documents WO 2012/153877 Al, CN 106 183 857 A and US 2012/202649 Al, for example.

Such electric bicycles must be lightweight such that power required for driving can be minimized. To this end, the parts that are mounted on the electric bicycle must be as small as possible in size and weight such that there is no inconvenience in using the bicycle.

In the case of electric bicycles, a battery is used, and the battery may be generally mounted on a frame or inside a tube constituting the frame. The capacity of the battery may increase as the size of the battery increases, but it cannot be increased indefinitely due to the total weight of the electric bicycle and the arrangement thereof in the frame. Therefore, when the battery is used, there is a problem in that the space for mounting on the frame is reduced.

However, in order to meet the recent demand for increasing the driving distance of electric bicycles, electric bicycles are provided with a plurality of batteries.

As the electric bicycle is provided with a plurality of batteries, the development of a control technique that is capable of efficiently charging the plurality of batteries is required.

### SUMMARY OF THE INVENTION

An object of the present disclosure is to provide an apparatus and method for controlling the charging of an electric bicycle which are capable of efficiently charging a plurality of batteries and thereby increasing the driving distance of an electric bicycle.

In addition, another object of the present disclosure is to provide an apparatus and method for controlling the charging of an electric bicycle which are capable of charging and discharging a plurality of batteries while maintaining the charging amount of a plurality of batteries at a certain level or higher, thereby increasing the life cycle of a plurality of batteries.

In addition, still another object of the present disclosure is to provide an apparatus and method for controlling the charging of an electric bicycle which are capable of reducing switching power loss through frequent switch control.

The technical problems to be achieved in the present disclosure are not limited to the above-mentioned technical problems, and other technical problems that are not mentioned will be clearly understood by those skilled in the art to which the present disclosure pertains from the description below.

The invention is set out in the appended set of claims. In order to solve the above-described problems, the present disclosure provides an apparatus for controlling the charging of an electric bicycle, including an alternator for generating an AC voltage by driving a pedal; an inverter for converting the AC voltage into a DC voltage; a plurality of batteries configured to be charged by the DC voltage; a motor which is supplied with electric power from at least one of the plurality of batteries to provide a rotational force to wheels; and a controller for selectively charging the plurality of batteries according to a charging efficiency of the plurality of batteries, by selecting and charging a battery having the highest charging efficiency among the plurality of batteries.

Herein, the controller may (be configured to) selectively charge a battery having the highest charging efficiency among the plurality of batteries.

In addition, the controller is configured to charge at least one battery whose charging amount is less than or equal to a first reference charging amount among the plurality of batteries to a second reference charging amount, and then selectively charge the plurality of batteries according to the charging efficiency.

In addition, the charging efficiency may be proportional to the temperature of the plurality of batteries in a range below the reference temperature, and may be inversely proportional to the charging amount of the plurality of batteries in a range where the output voltage of the plurality of batteries is greater than or equal to a reference voltage.

In addition, the controller is configured to compare the charging efficiencies of the plurality of batteries while charging at least one of the plurality of batteries, and select and charge a battery having the highest charging efficiency among the plurality of batteries.

In addition, the plurality of batteries may include a first battery which is charged to a first charging amount; and a second battery which is charged to a second charging amount that is higher than the first charging amount.

In addition, the apparatus for controlling the charging of an electric bicycle may further include a first switch which is connected between the first battery and the inverter; and a second switch which is connected between the second battery and the inverter.

In addition, the controller may (be configured to) control on/off of the first and second switches to selectively charge the first battery and the second battery.

In addition, after turning on the first switch, the controller may turn off the first switch and turn on the second switch based on a difference in the charging efficiencies of the first battery and the second battery, which is greater than or equal to a reference value. The controller may be configured to, after turning on the first switch, turn off the first switch and turn on the second switch based on a difference in the charging efficiencies of the first battery and the second battery, which is greater than or equal to a reference value.

In addition, after turning on the second switch, the controller may turn off the second switch and turn on the first switch based on a difference in the charging efficiencies of the first battery and the second battery, which is greater than or equal to the reference value. The controller may be configured to, after turning on the second switch, turn off the second switch and turn on the first switch based on a difference in the charging efficiencies of the first battery and the second battery, which is greater than or equal to the reference value.

In addition, the controller may (be configured to) charge the first battery to a second reference charging amount, and then charge the second battery to a second reference charging amount, based on the fact that both of the first and second charging amounts are less than or equal to a first reference charging amount.

In addition, the controller may (be configured to) charge both of the first battery and the second battery to a second reference charging amount, and then selectively charge the first battery and the second battery according to the charging efficiency of the first battery and the second battery, by selecting and charging a battery having a higher charging efficiency.

In addition, the present disclosure provides a method for controlling the charging of an electric bicycle which converts an AC voltage generated by driving a pedal into a DC voltage and charges the DC voltage in a plurality of batteries, the method including the steps of comparing the charging amounts of the plurality of batteries with a first reference charging amount; charging at least one battery whose charging amount is less than or equal to a first reference charging amount among the plurality of batteries to a second reference charging amount; comparing the charging efficiencies of the plurality of batteries with each other while charging the at least one of the plurality of batteries; and selectively charging a battery having the highest charging efficiency among the plurality of batteries.

Herein, the step of comparing the charging efficiencies of the plurality of batteries is performed while charging at least one of the plurality of batteries, a battery having the highest charging efficiency among the plurality of batteries is selected and charged.

Furthermore, the electric bicycle may charge the DC voltage in a first battery and a second battery and the method may comprise the steps of comparing the charging efficiencies of the first battery and the second battery; charging the first battery with a higher charging efficiency among the first battery and the second battery; charging the second battery when a difference in the charging efficiencies is greater than or equal to a reference value after charging the first battery; and charging the first battery when a difference in the charging efficiencies is greater than or equal to the reference value after charging the second battery.

In addition, the present disclosure provides a method for controlling the charging of an electric bicycle which converts an AC voltage generated by driving a pedal into a DC voltage and charges the DC voltage in a first battery and a second battery, the method including the steps of comparing the charging efficiencies of the first battery and the second battery; charging the first battery with a higher charging efficiency among the first battery and the second battery; charging the second battery when a difference in the charging efficiencies is greater than or equal to a reference value after charging the first battery; and charging the first battery when a difference in the charging efficiencies is greater than or equal to the reference value after charging the second battery.

According to the present disclosure, it is possible to efficiently charge a plurality of batteries, thereby increasing the driving distance of an electric bicycle.

In addition, according to the present disclosure, it is possible to charge and discharge a plurality of batteries while maintaining the charging amount of a plurality of batteries at a certain level or higher, and through this, the life cycle of a plurality of batteries can be increased.

In addition, according to the present disclosure, it is possible to reduce switching power loss through frequent switch control.

The effects of the present disclosure are not limited to those mentioned above, and other effects that are not mentioned will be clearly understood by those skilled in the art from the description below.

### BRIEF DESCRIPTION OF THE DRAWINGS

FIG. 1 is a block diagram of an electric bicycle to which the apparatus for controlling the charging of an electric bicycle according to an exemplary embodiment of the present disclosure is applied.
FIG. 2 is a block diagram of the charging/discharging system for an electric bicycle according to an exemplary embodiment of the present disclosure.
FIG. 3 is a circuit diagram of the first inverter of FIG. 2.
FIG. 4 is a graph illustrating the life cycle of a battery according to the range of charging amounts of the battery.
FIG. 5 is a graph illustrating the charging efficiency of a battery according to the temperature of the battery and the charging amount of the battery.
FIG. 6 is a control block diagram of the apparatus for controlling the charging of an electric bicycle according to an exemplary embodiment of the present disclosure.
FIG. 7 is a flowchart of the method for controlling an apparatus for charging an electric bicycle according to an exemplary embodiment of the present disclosure.
FIG. 8 is a flowchart of the method of selectively charging a plurality of batteries according to an exemplary embodiment of the present disclosure.

### DETAILED DESCRIPTION OF EXEMPLARY EMBODIMENTS

Hereinafter, with reference to the accompanying drawings, the exemplary embodiments of the present disclosure will be described in detail so that those skilled in the art can easily practice the present disclosure. The present disclosure may be embodied in many different forms and is not limited to the exemplary embodiments set forth herein. In order to clearly describe the present disclosure in the drawings, parts that are irrelevant to the description are omitted, and the same reference numerals are assigned to the same or similar components throughout the specification.

In the present specification, terms such as "include" or "have" are intended to designate that there is a feature, number, step, operation, component, part or combination thereof described in the specification, but it should be understood that it does not preclude the possibility of the presence or addition of one or more other features, numbers, steps, operations, components, parts or combinations thereof.

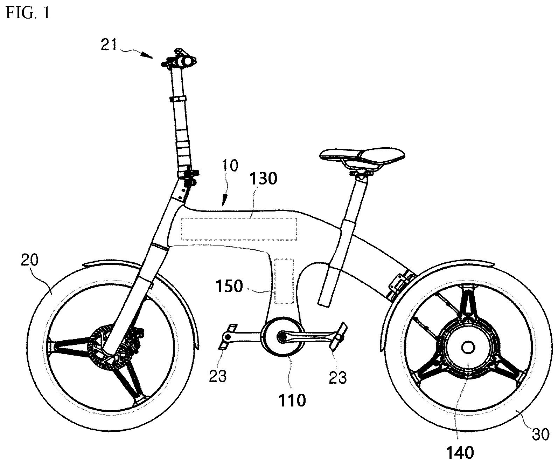

FIG. 1 is a block diagram of an electric bicycle to which the apparatus for controlling the charging of an electric bicycle according to an exemplary embodiment of the present disclosure is applied.

As illustrated in FIG. 1, the electric bicycle includes a frame 10 forming a skeleton.

A front wheel 20 and a handle part 21 are provided at the front of the frame 10, and a generator 22 is provided at the lower end of the frame 10. A pair of pedals 23 are connected to both sides of the generator 22. Herein, the generator 22 is a configuration that changes the rotational force of the pedal 23 into electrical energy.

A controller 150 for overall control of the electric bicycle is provided on an upper side of the generator 22 in the frame 10.

A rear wheel 30 is rotatably mounted at the rear of the frame 10, and a motor 140 for driving the electric bicycle by rotating the rear wheel 30 is mounted at the center of the rear wheel 30.

Although the wheel is illustrated as being composed of two wheels in FIG. 1, the present disclosure is not limited thereto, and it may be composed of three or four wheels. In addition, although the motor 140 is illustrated as being mounted on the rear wheel 30, it may be mounted on at least one of the front wheel 20 and the rear wheel 30.

In addition, the motor 140 may include a transmission such that the occupant can change the rotational speed of the rear wheel 30 by a manipulation device. The motor 140 receives electric power from a battery 130 to be described below and rotates the rear wheel 30 to provide a driving force to the electric bicycle.

A battery 130 is provided in the inner space of the frame 10, and the battery 130 is charged with electric energy generated by the generator 22. Although not illustrated in FIG. 1, a battery management system (BMS) that performs overall management of the battery 130 may be provided inside the frame 10. The battery management system is for overall management of the battery 130, manages to use the battery 130 under optimal conditions by monitoring the state of the battery 130, and predicts the replacement time of the battery 130 to perform a role of discovering problems associated with the battery 130 in advance.

The electric bicycle equipped with the above-described configurations is in a drivable state while the rear wheel 30 rotates as the occupant operates the motor 140 by manipulating the manipulation device. In this case, when the pedal 23 is rotated by foot, the rotational force of the pedal 23 is converted into electrical energy in the alternator 110, and the converted electrical energy is charged in the battery 130 such that the battery 130 can be continuously used.

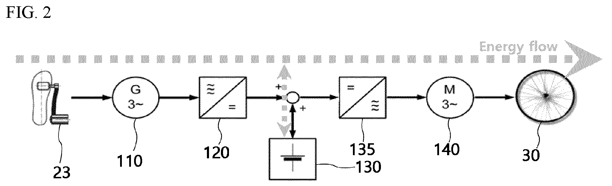

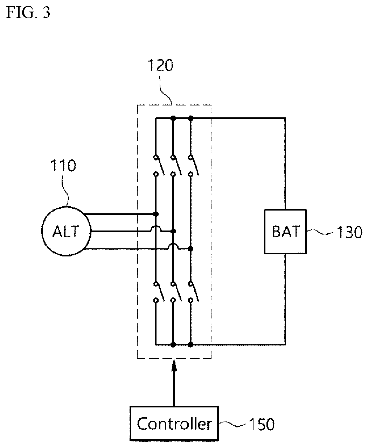

FIG. 2 is a block diagram of the charging/discharging system for an electric bicycle according to an exemplary embodiment of the present disclosure, and FIG. 3 is a circuit diagram of the first inverter of FIG. 2.

As illustrated in FIG. 2, the charging and discharging system of an electric bicycle according to an exemplary embodiment of the present disclosure is configured by including an alternator 110, a first inverter 120, a battery 130, a second inverter 135 and a motor 140. However, the electric bicycle is not limited thereto. For example, the second inverter 135 may also be omitted.

An electric bicycle requires electric power to obtain driving power and is provided with a battery 130 to supply such electric power. In addition, the alternator 110 is provided to charge the battery 130 while the electric bicycle is running.

The alternator 110 generates an AC voltage by using rotational kinetic energy that is generated by rotational driving of the pedal 23 provided in the electric bicycle.

Herein, the alternator 110 may be configured by including a driving shaft, a rotor and a stator, and the driving shaft is connected to the pedal 23 to rotate, and the rotor rotates by the driving shaft to generate current. In addition, the stator generates alternating current power by a rotating rotor.

The first inverter 120 converts the AC voltage generated by the alternator 110 into a DC voltage.

Referring to FIG. 3, the first inverter 120 may be for converting AC power into DC power in the form of pulses having an arbitrary variable frequency through pulse width modulation (PWM), and it may include a plurality of, for example, six switches, and two of these switches may form a pair in series and be connected to phase terminals of the alternator 110, respectively.

For example, the three pairs of switches are field effect transistors (Metal Oxide Semiconductor Field-Effect Transistors; MOSFETs), and may be formed of N-MOSFEs, P-MOSFETs or other appropriate semiconductor switching elements. Herein, the MOSFET has a drain terminal, a gate terminal and a source terminal.

The first inverter 120 charges the battery 130 by supplying the converted DC voltage to the battery 130.

The controller 150 may control the first inverter 120 to convert an AC voltage to a DC voltage. Specifically, the controller 150 may convert an AC voltage into a DC voltage by controlling on-off duty ratios of a plurality of switches.

The controller 150 may supply electric power generated by the alternator 110 to the motor 140 or charge the battery 130. That is, the DC voltage converted by the first inverter 120 is supplied to the battery 130 to charge the battery 130 or is supplied to the motor 140 to drive the motor 140 such that the wheel 30 can provide a rotational force.

The second inverter 135 is a configuration for supplying an AC voltage to the motor 140, and it may convert the DC voltage charged in the battery 130 into an AC voltage and supply the same to the motor 140. Accordingly, the motor 140 may provide a rotational force to the wheel 30.

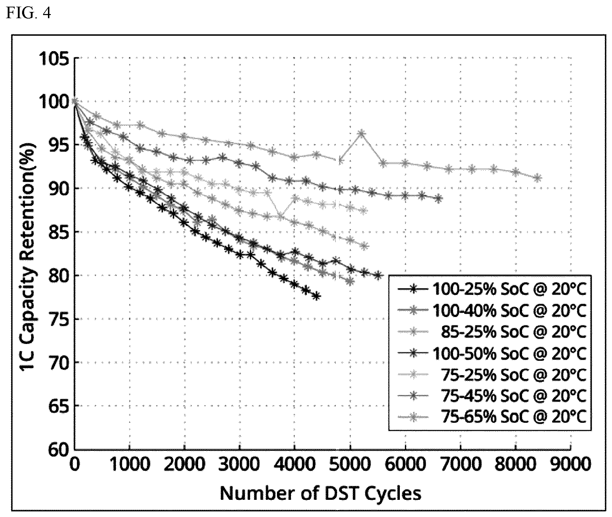

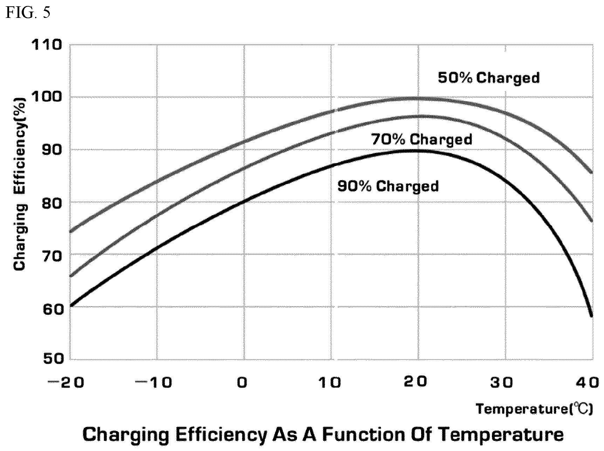

FIG. 4 is a graph illustrating the life cycle of a battery 130 according to the range of charging amounts of the battery 130, and FIG. 5 is a graph illustrating the charging efficiency of a battery 130 according to the temperature of the battery 130 and the charging amount of the battery 130.

In FIG. 4, the x-axis represents the number of charging/discharging cycles of the battery 130, and the y-axis represents the capacity retention rate of the battery 130. Herein, as the number of charging and discharging of the battery 130 increases, the capacity retention rate of the battery gradually decreases from 100%. In general, it is preferable to replace the battery when the capacity retention rate is 80% or lower. In addition, as the decrease rate of the capacity retention rate is smaller, the life cycle of the battery becomes longer.

Referring to FIG. 4, when the temperature of the battery 130 is 20°C and the range of the charging amount (state of charge; SOC) of the battery is 75 to 65%, that is, when the battery 130 is discharged when the charging amount of the battery 130 is 75% and the battery 130 is charged when the charging amount thereof is 65%, it can be confirmed that it has the longest life cycle.

In addition, when the temperature of the battery 130 is 20°C and the range of the charging amount of the battery 130 is 100 to 25%, that is, when the battery 130 is discharged when the charging amount of the battery 130 is 100% and the battery 130 is charged when the charging amount thereof is 25%, it can be confirmed that it has the shortest life cycle.

As described above, the life cycle of a battery 130 is the shortest when it is fully charged, then discharged, and then fully discharged, then charged, and it is the longest when it is charged and discharged while maintaining the charging amount of the battery 130 at a certain level or higher.

Generally, the output voltage of the battery 130 is different according to the charging amount of the battery 130. Specifically, the output voltage of the battery 130 may be classified into normal voltage, which is a normal range, high voltage that is higher than normal voltage by a certain level, low voltage that is lower than normal voltage by a certain level, over voltage that is higher than high voltage by a certain level, and under voltage that is lower than low voltage by a certain level. Herein, the controller 150 prohibits charging when the output voltage of the battery 130 is over voltage, and prohibits discharging when the output voltage of the battery 130 is under voltage. Further, in case of high voltage and low voltage, a warning is displayed. The absolute amounts of the above-mentioned certain levels vary between the actual implementations and particular use cases of the batteries 130. Thus, a skilled person will be aware of which absolute amounts are to be chosen for each of the certain levels.

In FIG. 5, the x-axis represents the temperature of the battery 130, and the y-axis represents the charging efficiency of the battery 130. Herein, the charging efficiency is proportional to the temperature of the battery 130 in a range below the reference temperature (*e.g.,* 20° C.), and is inversely proportional to the charging amount of the battery 130 in a range where the output voltage of the battery 130 is higher than the reference voltage (*e.g*., Low Voltage). As shown in FIG. 5, the charging efficiency is 100% at SOC 50% and 20° C, and since battery life decreases if SOC is used too low, the low voltage is a voltage value corresponding to SOC 50%.

Referring to FIG. 5, it can be confirmed that the charging efficiency of the battery 130 increases as the temperature of the battery 130 increases when the temperature of the battery is in a range of 20°C or less. In addition, it can be confirmed that the charging efficiency of the battery 130 increases in the order of 90%, 70% and 50% as the charging amount of the battery 130 decreases in a range where the output voltage of the battery 130 is equal to or higher than the Low Voltage.

The controller 150 may store the charging efficiency of the battery 130 according to the temperature of the battery 130 and the charging amount of the battery 130 in the form of a map, and may control charging of a plurality of batteries 130 by using the stored map.

In order to meet the demand for increasing the driving distance of an electric bicycle, the electric bicycle of the present disclosure includes a plurality of batteries 130. Herein, the plurality of batteries 130 may be lithium-ion (Li-ion) batteries, but the present disclosure is not limited thereto. In addition, the plurality of batteries 130 may be charged with a DC voltage from the first inverter 120, and the motor 140 may receive electric power from at least one of the plurality of batteries 130 to provide a rotational force to the wheel 30.

In particular, the controller 150 selectively charges the plurality of batteries 130 according to the charging efficiency of the plurality of batteries 130. That is, the controller 150 may selectively charge a battery having the highest charging efficiency among the plurality of batteries 130.

In order to create a state in which the output voltage of the plurality of batteries 130 is equal to or higher than the reference voltage (e.g., Low Voltage), the controller 150 charges a battery 130 whose charging amount is less than or equal to a first reference charging amount (*e.g.,* 25%) among the plurality of batteries 130 up to a second reference charging amount (*e.g.,* 30%). Thereafter, the controller 150 selectively charges the plurality of batteries 130 according to the charging efficiency.

While charging at least one of the plurality of batteries 130, the controller 150 compares the charging efficiencies of the plurality of batteries 130, selects and charges a battery 130 having a higher charging efficiency among the plurality of batteries 130.

Accordingly, the apparatus for controlling the charging of an electric bicycle according to an exemplary embodiment of the present disclosure may efficiently charge the plurality of batteries 130, thereby increasing the driving distance of the electric bicycle.

In addition, since the apparatus for controlling the charging of an electric bicycle according to an exemplary embodiment of the present disclosure compares the charging amounts of the plurality of batteries 130 with each other to charge, it is possible to charge and discharge by maintaining the charging amounts of the plurality of batteries 130 at a certain level or higher, and through this, the life cycle of the plurality of batteries 130 may be increased.

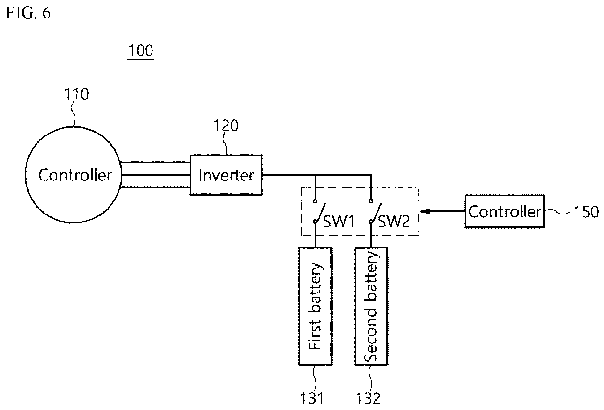

FIG. 6 is a control block diagram of the apparatus for controlling the charging of an electric bicycle according to an exemplary embodiment of the present disclosure.

Referring to FIG. 6, the plurality of batteries 130 may include a first battery 131 and a second battery 132. Herein, the first battery 131 may be charged with a first charging amount, and the second battery 132 may be charged with a second charging amount that is higher than the first charging amount.

The apparatus for controlling the charging of an electric bicycle according to an exemplary embodiment of the present disclosure may further include a first switch SW1 which is connected between the first battery 131 and the first inverter 120, and a second switch SW2 which is connected between the second battery 132 and the first inverter 120.

Although not illustrated in the drawings, the apparatus for controlling the charging of an electric bicycle according to an exemplary embodiment of the present disclosure may further include a first discharge switch which is connected between the first battery 131 and the second inverter 135, and a second discharge switch which is connected between the second battery 132 and the second inverter 135.

The controller 150 may monitor the states of the first battery 131 and the second battery 132 before charging control. In this case, when the states of the first battery 131 and the second battery 132 are both normal, charge and discharge control may be performed.

Unlike the above, the controller 150 turns off both of the first and second switches SW1, SW2 and the first and second discharge switches when both of the first battery 131 and the second battery 132 have an error. In this case, the charging and discharging operations of the first battery 131 and the second battery 132 are not performed. In other words, the controller 150 may be configured to selectively turn off one or more of the switches SW1, SW2 based on an error occurred to a battery connected to the one or more of the switches SW1, SW2. Thus, charging of erroneous batteries can be prevented on a single battery level such that charging energy may be saved.

In addition, when any one of the first battery 131 and the second battery 132 has an error, the charging switch and discharging switch of the battery with the error are turned off. In this case, the control operation of selecting and charging the first battery 131 and the second battery 132 is not performed, and the charging and discharging operations are performed only by normal batteries.

When the states of the first battery 131 and the second battery 132 are both normal, the controller 150 may control the on/off of the first switch SW1 and the second switch SW2 such that the first battery 131 and the second battery 132 may be selectively charged. Herein, when the first switch SW1 is turned on, the DC voltage supplied from the first inverter 120 charges the first battery 131, and when the second switch SW2 is turned on, the DC voltage supplied from the inverter 120 charges the second battery 132.

Specifically, first of all, when the first charging amount of the first battery 131 is less than or equal to a first reference charging amount (*e.g.,* 25%), the controller 150 may charge the first battery 131 up to a second reference charging amount (*e.g.,* 30%) such that the output voltage of the first battery 131 is greater than or equal to the reference voltage.

Thereafter, the controller 150 may selectively charge the first battery 131 and the second battery 132 according to the charging efficiency of the first battery 131 and the second battery 132.

In addition, when both of the first charging amount of the first battery 131 and the second charging amount of the second battery 132 are less than or equal to the first reference charging amount (*e.g.,* 25%), the controller 150 may charge the first battery 131 having a lower charging amount up to a second reference charging amount (*e.g.,* 30%), and then charge the second battery 132 up to the second reference charging amount (*e.g.,* 30%)*.*

Thereafter, the controller 150 may charge both of the first battery 131 and the second battery 132 up to the second reference amount of charge, and then selectively charge the first battery 131 and the second battery 132 according to the charging efficiency.

Hereinafter, the selective charging control method of the present disclosure will be described by taking a case in which the charging efficiency of the first battery 131 is higher than that of the second battery 132 as an example.

The controller 150 may charge the first battery 131 by turning on the first switch SW1. As the first battery 131 is charged, the charging amount of the first battery 131 increases and eventually becomes greater than the charging amount of the second battery 132. In this case, the charging efficiency of the first battery 131 is lower than that of the second battery 132, and in this case, when the controller 150 immediately turns off the first switch SW1 and turns on the second switch SW2, a problem occurs in that switching power loss occurs due to frequent switch control.

In order to solve this problem, the controller 150 turns off the first switch SW1 when a difference in the charging efficiencies of the first battery 131 and the second battery 132 is greater than or equal to a reference value, and turns on the second switch SW2 to charge the second battery 132. The reference value may not be zero. In other words, the reference value provides the function of a buffer to prevent excessive switching control between the charging of the first and second batteries 131, 132.

Thereafter, while the controller 150 turns on the second switch SW2 to charge the second battery 132, when a difference in the charging efficiencies of the first battery 131 and the second battery 132 is greater than or equal to the reference value, the controller may turn off the second switch SW2 and turn on the first switch SW1 to charge the first battery 131. The reference value may be a value that differs by at least 5% considering charging efficiency, component life, noise, etc.

Through this, the apparatus for controlling the charging of an electric bicycle according to an exemplary embodiment of the present disclosure may reduce switching power loss through frequent switch control.

As such, the apparatus for controlling the charging of an electric bicycle according to an exemplary embodiment of the present disclosure may efficiently charge the first and second batteries 131, 132, thereby increasing the driving distance of the electric bicycle.

In addition, since the apparatus for controlling the charging of an electric bicycle according to an exemplary embodiment of the present disclosure compares the charging amounts of the first and second batteries 131, 132 with each other to charge, it is possible to charge and discharge while maintaining the charging amounts of the first and second batteries 131, 132 at least a certain level or higher, and through this, the life cycle of the first and second batteries 131, 132 may be increased.

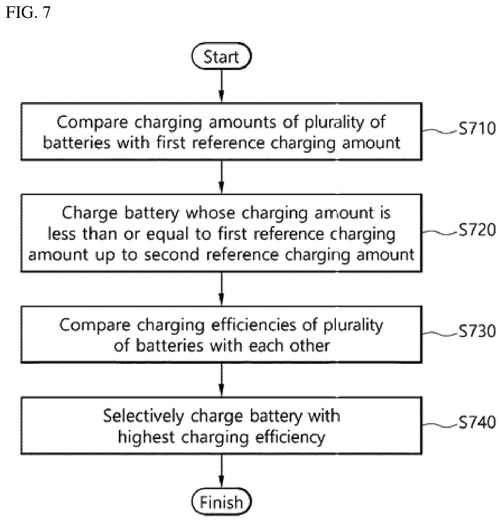

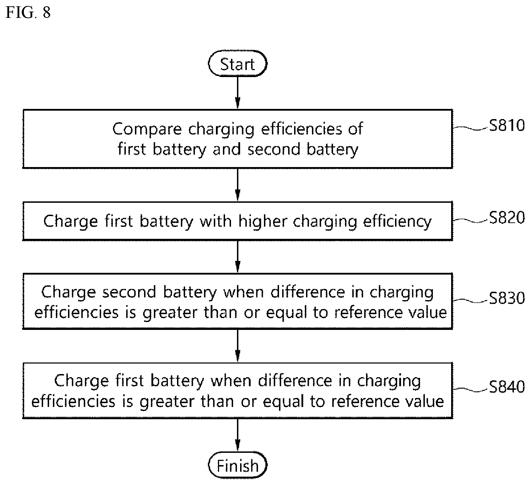

FIG. 7 is a flowchart of the method for controlling an apparatus for charging an electric bicycle according to an exemplary embodiment of the present disclosure, and FIG. 8 is a flowchart of the method of selectively charging a plurality of batteries according to an exemplary embodiment of the present disclosure.

Referring to FIG. 7, the method for controlling the apparatus for charging an electric bicycle according to an exemplary embodiment of the present disclosure is a method of converting an AC voltage generated by driving a pedal 23 into a DC voltage, and charging the DC voltage into a plurality of batteries 130.

Specifically, first of all, the charging amounts of the plurality of batteries 130 are compared with a first reference charging amount (*e.g.,* 25%) (S710).

Next, in order to create a state in which the output voltages of the plurality of batteries 130 are equal to or higher than a reference voltage (e.g., Low Voltage), at least one battery whose charging amount is less than or equal to a first reference charging amount among the plurality of batteries 130 is charged up to a second reference charging amount (*e.g.,* 30 %) (S720).

Next, the charging efficiencies of the plurality of batteries 130 are compared with each other while charging the at least one of the plurality of batteries 130 (S730).

Next, a battery having a higher charging efficiency among the plurality of batteries 130 is selectively charged (S740).

Herein, the charging efficiencies of the plurality of batteries 130 are compared while charging at least one of the plurality of batteries 130 to select and charge with a battery with a higher charging efficiency among the plurality of batteries 130.

Accordingly, the method for controlling the charging of an electric bicycle according to an exemplary embodiment of the present disclosure may efficiently charge a plurality of batteries 130, thereby increasing the driving distance of the electric bicycle.

Further, in the method for controlling the charging of an electric bicycle according to an exemplary embodiment of the present disclosure, since charging is performed while comparing the charging amounts of the plurality of batteries 130 with each other, it is possible to charge and discharge while maintaining the charging amounts of the plurality of batteries 130 at a certain level or higher, and through this, the life cycle of the plurality of batteries 130 may be increased.

Referring to FIG. 8, the method for controlling the charging of an electric bicycle according to an exemplary embodiment of the present disclosure is a method of converting an AC voltage generated by driving a pedal 23 into a DC voltage, and charging the DC voltage into a first battery 131 and a second battery 132.

Hereinafter, the selective charging control method of the present disclosure will be described by taking a case in which the charging efficiency of the first battery 131 is higher than that of the second battery 132 as an example.

The first battery 131 having a higher charging efficiency is charged before the second battery 132. As the first battery 131 is charged, the charging amount of the first battery 131 increases and eventually becomes greater than the charging amount of the second battery 132. In this case, the charging efficiency of the first battery 131 becomes lower than that of the second battery 132, and in this case, when the first and second switches SW1, SW2 are controlled immediately, a problem occurs in that switching power loss occurs due to frequent switch control.

In order to solve this problem, first of all, the present disclosure compares the charging efficiencies of the first battery 131 and the second battery 132 (S810).

Next, among the first battery 131 and the second battery 132, the first battery 131 having a higher charging efficiency is charged (S820).

Next, when a difference in the charging efficiencies of the first battery 131 and the second battery 132 is greater than or equal to a reference value after charging the first battery 131, the second battery is charged (S830).

Next, when a difference in the charging efficiencies of the first battery 131 and the second battery 132 is greater than equal to a reference value after charging the second battery 132, the first battery 131 is charged (S840).

Through this, the method for controlling the charging an electric bicycle according to an exemplary embodiment of the present disclosure may reduce switching power loss through frequent switch control.

Although an exemplary embodiment of the present disclosure has been described above, the present disclosure is not limited to the exemplary embodiments presented herein, and those skilled in the art who understand the present disclosure may easily propose other exemplary embodiments by modifying, changing, deleting or adding components, but this will also fall within the scope of the present disclosure which is defined in the appended set of claims.

## Claims

1. An apparatus for controlling the charging of an electric bicycle, comprising:
an alternator (110) for generating an AC voltage by driving a pedal (23);
an inverter (120) for converting the AC voltage into a DC voltage;
a plurality of batteries (130) configured to be charged by the DC voltage;
a motor (140) which is supplied with electric power from at least one of the plurality of batteries (130) to provide a rotational force to wheels (20, 30); and
a controller (150) configured to:
charge at least one battery (130) whose charging amount is less than or equal to a first reference charging amount among the plurality of batteries (130) to a second reference charging amount,
**characterized in that**
the controller (150) is further configured to:
compare the charging efficiencies of the plurality of batteries (130) while charging the at least one of the plurality of batteries (130), and
selectively charge the plurality of batteries (130) according to a charging efficiency of the plurality of batteries (150) by selecting and charging a battery (130) having the highest charging efficiency among the plurality of batteries (130).

2. The apparatus of claim 1, wherein the controller (150) is configured to selectively charge a battery (130) having the highest charging efficiency among the plurality of batteries (130).

3. The apparatus of any one of the preceding claims, wherein the charging efficiency is proportional to the temperature of the plurality of batteries (130) in a range below the reference temperature, and is inversely proportional to the charging amount of the plurality of batteries (130) in a range where the output voltage of the plurality of batteries (130) is greater than or equal to a reference voltage.

4. The apparatus of any one of the preceding claims, wherein the plurality of batteries (130) comprise:
a first battery (131) which is charged to a first charging amount; and
a second battery (132) which is charged to a second charging amount that is higher than the first charging amount.

5. The apparatus of claim 4, further comprising:
a first switch (SW1) which is connected between the first battery (131) and the inverter (120); and
a second switch (SW2) which is connected between the second battery (132) and the inverter (120).

6. The apparatus of claim 5, wherein the controller (150) is configured to control on/off of the first and second switches (SW1, SW2) to selectively charge the first battery (131) and the second battery (132).

7. The apparatus of claim 5 or 6, wherein the controller (150) is configured to, after turning on the first switch (SW1), turn off the first switch (131) and to turn on the second switch (SW2) based on a difference in the charging efficiencies of the first battery (131) and the second battery (132), which is greater than or equal to a reference value.

8. The apparatus of claim 7, wherein the controller (150) is configured to, after turning on the second switch (SW2), turn off the second switch (SW2) and to turn on the first switch (SW1) based on a difference in the charging efficiencies of the first battery (131) and the second battery (132), which is greater than or equal to the reference value.

9. The apparatus of any one of the claims 5 to 8, wherein the controller (150) is configured to charge the first battery (131) to a second reference charging amount, and to then charge the second battery (132) to the second reference charging amount, based on the fact that both of the first and second charging amounts are less than or equal to a first reference charging amount.

10. The apparatus of claim 9, wherein the controller (150) is configured to charge both of the first battery (131) and the second battery (132) to a second reference charging amount, and to then selectively charge the first battery (131) and the second battery (132) according to the charging efficiency of the first battery (131) and the second battery (132), by selecting and charging a battery having a higher charging efficiency.

11. A method for controlling the charging of an electric bicycle which converts an AC voltage generated by driving a pedal (23) into a DC voltage and charges the DC voltage in a plurality of batteries (130), the method comprising the steps of:
Comparing (S710) the charging amounts of the plurality of batteries (130) with a first reference charging amount;
charging (S720) at least one battery (130) whose charging amount is less than or equal to a first reference charging amount among the plurality of batteries (130) to a second reference charging amount;
**characterized by**
comparing (S730) the charging efficiencies of the plurality of batteries (130) with each other while charging the at least one of the plurality of batteries (130); and
selectively charging (S740) a battery (130) having the highest charging efficiency among the plurality of batteries (130).

12. The method of claim 11, wherein the electric bicycle charges the DC voltage in a first battery (131) and a second battery (132), the method comprising the steps of:
comparing (S810) the charging efficiencies of the first battery (131) and the second battery (132);
charging (S820) the battery (131, 132) with a higher charging efficiency among the first battery (131) and the second battery (132);
charging (S830) the second battery (132) when a difference in the charging efficiencies is greater than or equal to a reference value after charging the first battery (131); and
charging (S840) the first battery (131) when a difference in the charging efficiencies is greater than or equal to the reference value after charging the second battery (132), wherein the reference value is a value that differs by at least 5% considering charging efficiency, component life or noise.

## Patentansprüche

1. Vorrichtung zum Steuern des Ladevorgangs eines Elektrofahrrads, umfassend:
einen Wechselstromgenerator (110) zum Erzeugen einer Wechselspannung durch Antreiben eines Pedals (23);
einen Wechselrichter (120) zum Umwandeln der Wechselspannung in eine Gleichspannung;
mehrere Batterien (130), die zum Laden durch die Gleichspannung konfiguriert sind;
einen Motor (140), der mit elektrischer Energie aus mindestens einer der mehreren Batterien (130) versorgt wird, um eine Drehkraft auf Räder (20, 30) auszuüben; und
eine Steuerung (150), die dazu konfiguriert ist,
mindestens eine Batterie (130) unter den mehreren Batterien (130), deren Ladestand geringer oder gleich einem ersten Referenzladestand ist, auf einen zweiten Referenzladestand zu laden, **dadurch gekennzeichnet, dass** die Steuerung (150) ferner dazu konfiguriert ist,
die Ladeeffizienzen der mehreren Batterien (130) während des Ladens der mindestens einen der mehreren Batterien (130) zu vergleichen und
die mehreren Batterien (130) entsprechend einer Ladeeffizienz der mehreren Batterien (150) selektiv zu laden, indem eine Batterie (130) mit der höchsten Ladeeffizienz aus den mehreren Batterien (130) ausgewählt und geladen wird.

2. Vorrichtung nach Anspruch 1, wobei die Steuerung (150) dazu konfiguriert ist, selektiv eine Batterie (130) mit der höchsten Ladeeffizienz unter den mehreren Batterien (130) zu laden.

3. Vorrichtung nach einem der vorstehenden Ansprüche, wobei die Ladeeffizienz proportional zur Temperatur der mehreren Batterien (130) in einem Bereich unterhalb der Referenztemperatur und umgekehrt proportional zum Ladestand der mehreren Batterien (130) in einem Bereich ist, in dem die Ausgangsspannung der mehreren Batterien (130) größer oder gleich einer Referenzspannung ist.

4. Vorrichtung nach einem der vorstehenden Ansprüche, wobei die mehreren Batterien (130) Folgendes umfassen:
eine erste Batterie (131), die auf einen ersten Ladestand geladen ist; und
eine zweite Batterie (132), die auf einen zweiten Ladestand geladen ist, der höher ist als der erste Ladestand.

5. Vorrichtung nach Anspruch 4, umfassend ferner:
einen ersten Schalter (SW1), der zwischen der ersten Batterie (131) und dem Wechselrichter (120) geschaltet ist; und
einen zweiten Schalter (SW2), der zwischen der zweiten Batterie (132) und dem Wechselrichter (120) geschaltet ist.

6. Vorrichtung nach Anspruch 5, wobei die Steuerung (150) so konfiguriert ist, dass sie das Ein- und Ausschalten des ersten und zweiten Schalters (SW1, SW2) steuert, um selektiv die erste Batterie (131) und die zweite Batterie (132) zu laden.

7. Vorrichtung nach Anspruch 5 oder 6, wobei die Steuerung (150) so konfiguriert ist, dass sie nach dem Einschalten des ersten Schalters (SW1) den ersten Schalter (131) ausschaltet und den zweiten Schalter (SW2) einschaltet, basierend auf einer Differenz der Ladeeffizienzen der ersten Batterie (131) und der zweiten Batterie (132), die größer oder gleich einem Referenzwert ist.

8. Vorrichtung nach Anspruch 7, wobei die Steuerung (150) so konfiguriert ist, dass sie nach dem Einschalten des zweiten Schalters (SW2) den zweiten Schalter (SW2) ausschaltet und den ersten Schalter (SW1) einschaltet, basierend auf einer Differenz der Ladeeffizienzen der ersten Batterie (131) und der zweiten Batterie (132), die größer oder gleich dem Referenzwert ist.

9. Vorrichtung nach einem der Ansprüche 5 bis 8, wobei die Steuerung (150) so konfiguriert ist, dass sie die erste Batterie (131) auf einen zweiten Referenzladestand lädt und anschließend die zweite Batterie (132) auf den zweiten Referenzladestand lädt, basierend auf der Tatsache, dass sowohl der erste als auch der zweite Ladestand geringer oder gleich einem ersten Referenzladestand sind.

10. Vorrichtung nach Anspruch 9, wobei die Steuerung (150) so konfiguriert ist, dass sie sowohl die erste Batterie (131) als auch die zweite Batterie (132) auf einen zweiten Referenzladestand lädt und dann die erste Batterie (131) und die zweite Batterie (132) entsprechend der Ladeeffizienz der ersten Batterie (131) und der zweiten Batterie (132) selektiv lädt, indem eine Batterie mit einer höheren Ladeeffizienz ausgewählt und geladen wird.

11. Verfahren zum Steuern des Ladevorgangs eines Elektrofahrrads, das eine durch Antreiben eines Pedals (23) erzeugte Wechselspannung in eine Gleichspannung umwandelt und die Gleichspannung in mehreren Batterien (130) lädt, wobei das Verfahren die folgenden Schritte umfasst:
Vergleichen (S710) der Ladestände der mehreren Batterien (130) mit einem ersten Referenzladestand;
Laden (S720) mindestens einer Batterie (130) unter den mehreren Batterien (130), deren Ladestand geringer oder gleich einem ersten Referenzladestand ist, auf einen zweiten Referenzladestand;
**gekennzeichnet durch**
Vergleichen (S730) der Ladeeffizienzen der mehreren Batterien (130) miteinander, während die mindestens eine der mehreren Batterien (130) geladen wird; und
selektives Laden (S740) einer Batterie (130) mit der höchsten Ladeeffizienz unter den mehreren Batterien (130).

12. Verfahren nach Anspruch 11, wobei das Elektrofahrrad die Gleichspannung in einer ersten Batterie (131) und einer zweiten Batterie (132) lädt, wobei das Verfahren die folgenden Schritte umfasst:
Vergleichen (S810) der Ladeeffizienzen der ersten Batterie (131) und der zweiten Batterie (132);
Laden (S820) der Batterie (131, 132) mit der höheren Ladeeffizienz unter der ersten Batterie (131) und der zweiten Batterie (132);
Laden (S830) der zweiten Batterie (132), wenn eine Differenz der Ladeeffizienzen größer oder gleich einem Referenzwert nach dem Laden der ersten Batterie (131) ist; und
Laden (S840) der ersten Batterie (131), wenn eine Differenz der Ladeeffizienzen größer oder gleich dem Referenzwert nach dem Laden der zweiten Batterie (132) ist, wobei der Referenzwert ein Wert ist, der unter Berücksichtigung der Ladeeffizienz, der Lebensdauer der Komponenten oder des Rauschens um mindestens 5% abweicht.

## Revendications

1. Appareil de commande de recharge d'un vélo électrique, comprenant :
un alternateur (110) pour générer une tension alternative en entraînant une pédale (23) ;
un inverseur (120) pour convertir la tension alternative en tension continue ;
une pluralité de batteries (130) configurées pour être rechargées par la tension continue ;
un moteur (140) qui est alimenté en électricité par au moins l'une de la pluralité de batteries (130) pour fournir une force de rotation aux roues (20, 30) ; et
un contrôleur (150) configuré pour :
recharger au moins une batterie (130) dont la quantité de recharge est inférieure ou égale à une première quantité de recharge de référence parmi la pluralité de batteries (130) jusqu'à une deuxième quantité de recharge de référence, **caractérisé en ce que** le contrôleur (150) est configuré en outre pour :
comparer les efficacités de recharge de la pluralité de batteries (130) tout en rechargeant au moins l'une de la pluralité de batteries (130), et
recharger sélectivement la pluralité de batteries (130) en fonction d'une efficacité de recharge de la pluralité de batteries (150) en sélectionnant et en chargeant une batterie (130) présentant la plus haute efficacité de recharge parmi la pluralité de batteries (130).

2. Appareil selon la revendication 1, dans lequel le contrôleur (150) est configuré pour recharger sélectivement une batterie (130) présentant l'efficacité de recharge la plus élevée parmi la pluralité de batteries (130).

3. Appareil selon l'une quelconque des revendications précédentes, dans lequel l'efficacité de recharge est proportionnelle à la température de la pluralité de batteries (130) dans une plage inférieure à la température de référence, et est inversement proportionnelle à la quantité de recharge de la pluralité de batteries (130) dans une plage où la tension de sortie de la pluralité de batteries (130) est supérieure ou égale à une tension de référence.

4. Appareil selon l'une des revendications précédentes, dans lequel la pluralité de batteries (130) comprend :
une première batterie (131) qui est rechargée à une première quantité de recharge ; et
une deuxième batterie (132) qui est rechargée à une deuxième quantité de recharge supérieure à la première quantité de recharge.

5. Appareil selon la revendication 4, comprenant en outre :
un premier commutateur (SW1) qui est connecté entre la première batterie (131) et l'inverseur (120) ; et
un deuxième commutateur (SW2) qui est connecté entre la deuxième batterie (132) et l'inverseur (120).

6. Appareil selon la revendication 5, dans lequel le contrôleur (150) est configuré pour commander l'activation/désactivation du premier et du deuxième commutateurs (SW1, SW2) afin de recharger sélectivement la première batterie (131) et la deuxième batterie (132).

7. Appareil de la revendication 5 ou 6, dans lequel le contrôleur (150) est configuré pour, après l'activation du premier commutateur (SW1), désactiver le premier commutateur (131) et activer le deuxième commutateur (SW2) en fonction d'une différence dans les efficacités de recharge de la première batterie (131) et de la deuxième batterie (132), qui est supérieure ou égale à une valeur de référence.

8. Appareil de la revendication 7, dans lequel le contrôleur (150) est configuré pour, après l'activation du deuxième commutateur (SW2), désactiver le deuxième commutateur (SW2) et activer le premier commutateur (SW1) en fonction d'une différence dans les efficacités de recharge de la première batterie (131) et de la deuxième batterie (132), qui est supérieure ou égale à une valeur de référence.

9. Appareil selon l'une quelconque des revendications 5 à 8, dans lequel le contrôleur (150) est configuré pour recharger la première batterie (131) jusqu'à une deuxième quantité de recharge de référence, et pour recharger ensuite la deuxième batterie (132) jusqu'à la deuxième quantité de recharge de référence, sur la base du fait que la première et la deuxième quantités de recharge sont inférieures ou égales à une première quantité de recharge de référence.

10. Appareil selon la revendication 9, dans lequel le contrôleur (150) est configuré pour recharger à la fois la première batterie (131) et la deuxième batterie (132) jusqu'à un deuxième quantité de recharge de référence, et pour recharger ensuite sélectivement la première batterie (131) et la deuxième batterie (132) en fonction de l'efficacité de recharge de la première batterie (131) et de la deuxième batterie (132), en sélectionnant et en rechargeant une batterie présentant une efficacité de recharge plus élevée.

11. Procédé de commande de la recharge d'un vélo électrique qui convertit une tension alternative générée en entraînant une pédale (23) en tension continue et recharger la tension continue dans une pluralité de batteries (130), le procédé comprenant les étapes suivantes :
comparer (S710) la quantité de recharge de la pluralité de batteries (130) avec une première quantité de recharge de référence :
recharger (S720) au moins une batterie (130) dont la quantité de recharge est inférieure ou égale à une première quantité de recharge de référence parmi la pluralité de batteries (130) jusqu'à une deuxième quantité de recharge de référence ;
**caractérisé en ce que**,
comparer (S730) les efficacités de recharge de la pluralité de batteries (130) l'une avec l'autre tout en rechargeant au moins l'une de la pluralité de batteries (130) ; et
recharger sélectivement (S740) une batterie (130) présentant l'efficacité de recharge la plus élevée parmi la pluralité de batteries (130).

12. Procédé selon la revendication 11, dans lequel le vélo électrique recharge la tension continue dans une première batterie (131) et une deuxième batterie (132), le procédé comprenant les étapes suivantes :
comparer (S810) les efficacités de recharge de la première batterie (131) et de la deuxième batterie (132) ;
recharger (S820) la batterie (131, 132) avec une efficacité de recharge plus élevée parmi la première batterie (131) et la deuxième batterie (132) ;
recharger (S830) la deuxième batterie (132) lorsqu'une différence dans les efficacités de recharge est supérieure ou égale à une valeur de référence après avoir rechargé la première batterie (131) ; et
recharger (S840) la première batterie (131) lorsque la différence dans les efficacités de recharge est supérieure ou égale à la valeur de référence après avoir rechargé la deuxième batterie (132), la valeur de référence étant une valeur qui diffère d'au moins 5 % en tenant compte d'une efficacité de recharge, d'une durée de vie des composants ou d'un bruit.
